# EUROPÄISCHE PATENTSCHRIFT

(11) **EP 2 889 170 B1**
(45) Veröffentlichungstag und Bekanntmachung des Hinweises auf die Patenterteilung: **16.10.2019**
(21) Anmeldenummer: 14196611.9
(22) Anmeldetag: 05.12.2014
(51) Int. Cl.: B60J 7/12

(54) **Verdeck für ein Cabriolet-Fahrzeug mit einem bewegbaren hinteren Dachelement**
Soft top for a convertible vehicle with a movable rear roof element
Toit pour un véhicule cabriolet doté d'un élément de toit arrière mobile

(30) Priorität: 31.12.2013 DE 102013115010
(43) Veröffentlichungstag der Anmeldung: 01.07.2015
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Wolfgang N.K.

(56) Entgegenhaltungen:
- EP-A2- 0 938 994
- EP-A2- 1 112 879
- US-A- 5 067 768
- US-A- 6 048 021
- US-A1- 2003 080 580

## Beschreibung

Die Erfindung betrifft ein Verdeck für ein Cabriolet-Fahrzeug, welches zwischen einer einen Fahrgastraum überspannenden geschlossenen Stellung und einer den Fahrgastraum zumindest teilweise freigebenden, offenen Stellung verlagerbar ist, nach der im Oberbegriff des Patentanspruches 1 näher definierten Art.

Aus der Praxis sind Cabriolet-Fahrzeuge mit Soft-Top-Verdecken bekannt, bei welchen ein Verdeckbezug verdeckheckseitig an einem Stoffhaltebügel festgelegt ist. Bei einer Überführung des Verdecks von einer Schließposition in eine offene Position wird zunächst der Stoffhaltebügel in eine annähernd vertikale Position verschwenkt, damit ein Verdecckastendeckel, welcher üblicherweise einen heckseitigen Stauraum des Verdecks begrenzt, geöffnet werden kann. Anschließend wird das Verdeck zusammen mit dem Stoffhaltebügel über ein Verdeckgestänge in den heckseitigen Stauraum verlagert und der Verdeckkastendeckel anschließend in seine geschlossene Position überführt.

Bei derartigen Verdecken ist der Stoffhaltebügel beispielsweise über ein Drehgelenk mit dem Verdeckgestänge verbunden. Um den Stoffhaltebügel in seiner an dem Verdeckkastendeckel anliegenden Schließposition sicher zu halten und zu verhindern, dass der Stoffhaltebügel bei nach oben wirkenden Kräften, wie beispielsweise einer von dem Verdeckbezug oder einer bei einer Fahrt auf den Stoffhaltebügel wirkenden Kraft, aus seiner Schließstellung bewegt wird, sind beispielsweise mit zwei Hebeln ausgebildete Spannstangen vorgesehen, über welche der Stoffhaltebügel an das Verdeckgestänge angebunden ist.

Da die Spannstangen bei bekannten Verdecken nachteilhafterweise eine große Distanz zwischen dem Stoffhaltebügel und dem Verdeckgestänge überbrücken und die Spannstangen in geschlossener Stoffhaltebügelposition im Wesentlichen quer zu äußeren auf den Stoffhaltebügel wirkenden Kräften angeordnet sind, ist eine Krafteinleitung zum Halten des Stoffhaltebügels in seiner Schließposition nachteilhaft. Zudem kann es durch die große Längenerstreckung der Spannstangen bei geschlossenem Stoffhaltebügel zu Verformungen einerseits an den Spannstangen und andererseits an dem Stoffhaltebügel kommen, welche zu einem frühzeitigen Ausfall dieser Bauteile führen können.

Aus der US 6,048,021 A ist ein Verdeck mit einem einen Stoffhaltebügel aufweisenden Verdeckgestänge bekannt. Der Stoffhaltebügel ist über Spannstangen mit dem restlichen Verdeckgestänge verbunden, wobei die Spannstangen über einen Betätigungshebel mit einem Hauptlager verbunden sind. Zur Verlagerung des Stoffhaltebügels zwischen einer geschlossenen Position und einer aufgeschwenkten Position ist eine Betätigungseinrichtung vorgesehen, wobei der Stoffhaltebügel hierbei um einen Gelenkpunkt verschwenkt wird, über den der Stoffhaltebügel mit einer Hauptsäule des Verdecks verbunden ist.

Es ist Aufgabe der vorliegenden Erfindung, ein Verdeck für ein Cabriolet-Fahrzeug der eingangs genannten Art zu schaffen, bei welchem ein hinteres Dachelement auf einfache und sichere Weise in der Schließposition gehalten ist, wobei auf das hintere Dachelement nur geringe Belastungen wirken.

Diese Aufgabe wird mit einem Verdeck für ein Cabriolet-Fahrzeug gemäß den Merkmalen des Patentanspruches 1 gelöst.

Es wird somit ein Verdeck für ein Cabriolet-Fahrzeug vorgeschlagen, welches zwischen einer einen Fahrgastraum zumindest bereichsweise abdeckenden und einer den Fahrgastraum zumindest teilweise freigebenden Stellung verlagerbar ist, und welches ein zumindest teilweise unabhängig von anderen Dachelementen bewegbares hinteres Dachelement aufweist, das zwischen einer Schließposition und einer gegenüber der Schließposition zumindest teilweise nach oben aufbewegten Position verlagerbar ist, wobei das hintere Dachelement verdeckfrontseitig an einem Verdeckgestänge gelagert ist, und wobei ein separater Hebelmechanismus zur Verlagerung des hinteren Dachelements zwischen seiner Schließposition und seiner nach oben bewegten Position vorgesehen ist, mittels welchem das hintere Dachelement direkt karosseriefest anbindbar ist.

Erfindungsgemäß ist dabei vorgesehen, dass der Hebelmechanismus als Kniehebelmechanismus mit zwei Hebeln ausgebildet ist und dazu ausgebildet ist, das hintere Dachelement in seiner Schließposition zu halten, wobei der Hebelmechanismus keine direkte Anbindung an das zur Bewegung der den Fahrgastraum abdeckenden Dachteile zwischen deren geschlossener und offener Position vorgesehene Verdeckgestänge aufweist und lediglich mit dem hinteren Dachelement verbunden und karosseriefest anbindbar ist.

Bei einem erfindungsgemäß ausgebildeten Verdeck ist das hintere Dachelement sowohl sehr stabil in seiner Schließposition gehalten als auch flexibel und einfach in seine offene Position überführbar.

Durch die karosseriefeste Anbindung des hinteren Dachelements ist eine Verformungs- bzw. Durchbiegegefahr des hinteren Dachteils bzw. des Hebelmechanismus stark reduziert, da der das hintere Dachelement in seiner beispielsweise direkt an einen Heckdeckel bzw. einen Verdeckkastendeckel grenzenden bzw. anliegenden Schließposition haltende Mechanismus insgesamt nur eine geringe Längenerstreckung aufweist und mit dem Hebelmechanismus eine günstige Krafteinleitung in den Stoffhaltebügel in dessen geschlossener Position erzielbar ist. Dies resultiert daraus, dass eine von dem Hebelmechanismus auf den Stoffhaltebügel wirkende Kraft im Unterschied zu bekannten Ausführungen mit Spannstangen wenigstens annähernd in Richtung der auf den Stoffhaltebügel wirkenden Kräfte wirkt.

Das hintere Dachelement liegt in seiner Schließposition insbesondere auf einer Karosserie, einem Verdeckkastendeckel oder einem Heckdeckel des Cabriolet-Fahrzeugs auf und nimmt dabei - mit einem unteren Randbereich - eine im Wesentlichen horizontale Stellung ein. In seiner offenen Position ist das hintere Dachelement in einfacher Ausführung der Erfindung insbesondere um ein im vorderen Bereich des Stoffhaltebügels angeordnetes Lager verschwenkbar.

Der Hebelmechanismus ist zweckmäßigerweise dazu ausgebildet, das hintere Dachelement in eine Ablageposition bei vollständig geöffneter Stellung des Verdecks zu verlagern.

Ein erster Hebel des Hebelmechanismus kann bei einer konstruktiv einfachen Ausführung des erfindungsgemäßen Verdecks karosseriefest insbesondere an einem Hauptlager und ein zweiter Lenker an dem hinteren Dachelement angelenkt sein, wobei die beiden Hebel wiederum über einen Gelenkpunkt gelenkig miteinander verbunden sind.

Damit das hintere Dachelement in seiner Schließposition sehr sicher gehalten und auch bei großen äußeren, auf das hintere Dachelement eine Kraftkomponente in Verdeckhochrichtung einbringenden Krafteinwirkungen sicher verriegelt ist, kann der Hebelmechanismus in geschlossener Verdeckposition eine Übertotpunktstellung einnehmen.

Bei einer vorteilhaften Ausführung eines erfindungsgemäßen Verdecks ist ein insbesondere karosseriefester Anschlag vorgesehen, welcher derart angeordnet ist, dass der sich in seiner Übertotpunktstellung befindliche Hebelmechanismus durch eine äußere Krafteinwirkung nicht aus der Übertotpunktstellung bewegbar ist. Der Anschlag ist insbesondere im Bereich eines karosseriefest festlegbaren Hauptlagers des Verdecks angeordnet.

Um das hintere Dachelement auf einfache Weise automatisiert bewegen zu können, ist bei einer vorteilhaften Ausführung der Erfindung eine Antriebseinrichtung vorgesehen, mittels welcher der Hebelmechanismus antreibbar und das hintere Dachelement zwischen seiner Schließposition und seiner aufbewegten Position verlagerbar ist.

Eine vorteilhafte Kopplung zwischen der Antriebseinrichtung und dem Hebelmechanismus ist geschaffen, wenn die Antriebseinrichtung zur Bewegung des hinteren Dachelements an einem Hebel des Hebelmechanismus oder an einem die Hebel des Hebelmechanismus verbindenden Gelenkpunkt angelenkt ist. Andernends ist die Antriebseinrichtung insbesondere karosseriefest gelagert und beispielsweise gelenkig mit dem Hauptlager verbunden.

Bei einer besonders vorteilhaften Ausführung der Erfindung ist es vorgesehen, dass ein Hebel des Hebelmechanismus Bestandteil eines Ablagemechanismus ist, mittels welchem das hintere Dachelement bei einer Verdecköffnungsbewegung in einen heckseitigen Ablageraum absenkbar ist. Hierdurch können in vorteilhafter Weise Hebel bzw. Bauteile eingespart werden, welche bei bekannten Verdecken lediglich zur Umsetzung des Ablagemechanismus für das hintere Dachelement eingesetzt werden. Die beschriebene erfindungsgemäße Ausführung ist somit besonders bauraum- und kostengünstig umsetzbar.

Der Ablagemechanismus ist bei einer konstruktiv vorteilhaften Ausführung der Erfindung als ein karosseriefest angelenkter Viergelenkmechanismus ausgebildet, welcher vorliegend einen Hebel des Hebelmechanismus, den Hauptlenker des Verdeckgestänges und das hintere Dachelement umfasst.

Um eine Absenkbewegung für das hintere Dachelement besonders robust auszuführen, kann ein Anschlag vorgesehen sein, welcher sicherstellt, dass der Gelenkpunkt der Hebel des Hebelmechanismus während der Absenkbewegung des hinteren Dachelements karosseriefest ist.

Bei einer konstruktiv einfachen und kostengünstigen Ausführung der Erfindung ist lediglich ein gemeinsamer Anschlag vorzusehen, welcher insbesondere im Bereich des Hauptlagers angeordnet ist.

Das Verdeck kann grundsätzlich als Soft-Top-Verdeck und als Hard-Top-Verdeck ausgebildet sein. Wenn das Verdeck als Soft-Top ausgebildet ist, stellt das hintere Dachelement einen Stoffhaltebügel dar. Gegenüber einer Ausführung mit Spannstangen weist eine derartige Ausführung einen größeren Bauraum für einen Verdeckstoff des Verdecks in abgelegtem Zustand des Verdecks auf. Dies resultiert daraus, dass der Hebelmechanismus gegenüber der Ausführung mit Spannstangen in einen Bereich des Hauptlagers verlagert ist.

Wenn das Verdeck hingegen als Hard-Top ausgebildet ist, stellt das hintere Dachelement ein hinteres Dachteil dar.

Bei einer vorteilhaften Ausführung der Erfindung kann das hintere Dachelement schwenkbar an dem Hauptlenker angelenkt sein, so dass das hintere Dachelement bei seiner Öffnungs- bzw. Schließbewegung eine Schwenkbewegung um die Lagerung an dem Hauptlenker ausführt.

Sowohl die in den Patentansprüchen angegebenen Merkmale als auch die in dem nachfolgenden Ausführungsbeispiel des erfindungsgemäßen Verdecks angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Verdecks ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfacht dargestellte dreidimensionale Ansicht eines Soft-Top-Verdecks eines Cabriolet-Fahrzeuges, wobei das Verdeck in einer Schließposition gezeigt ist;
- Fig. 2: eine Seitenansicht des geschlossenen Verdecks der Fig. 1, wobei das Verdeck der Einfachheit halber ohne Verdeckbezug dargestellt ist;
- Fig. 3: eine der Fig. 2 entsprechende Darstellung des Verdecks, wobei ein Stoffhaltebügel des Verdecks in einer aufgeschwenkten Position gezeigt ist;
- Fig. 4: eine vereinfachte Ansicht des Verdecks der Fig. 1 bis 3 während einer Verdecköffnungsbewegung;
- Fig. 5: eine vereinfachte Darstellung eines Ausschnitts des Verdecks der Fig. 1 bis 4, wobei ein den Stoffhaltebügel karosseriefest anbindender Hebelmechanismus in einer Position bei geschlossenem Verdeck ersichtlich ist, welcher einenends mit dem Stoffhaltebügel und andernends mit einem Hauptlager des Verdecks verbunden ist;
- Fig. 6: eine vereinfachte Ansicht des Ausschnitts der Fig. 5 mit dem Hebelmechanismus, wobei der Stoffhaltebügel in einer nach oben aufgeschwenkten Position gezeigt ist;
- Fig. 7: eine vereinfachte Darstellung des Ausschnitts der Fig. 5 und 6, wobei der Hebelmechanismus nach Beginn einer Absenkbewegung des Verdecks gezeigt ist;
- Fig. 8: eine vereinfachte Darstellung des Ausschnitts der Fig. 5 bis 7, wobei das Verdeck weiter Richtung abgelegter Position verlagert ist; und
- Fig. 9: eine vereinfachte Ansicht des Ausschnitts der Fig. 5 bis 8 bei geöffnetem Verdeck.

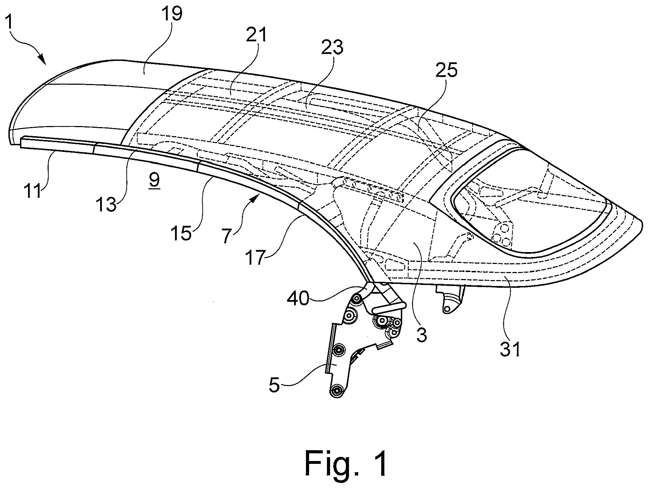

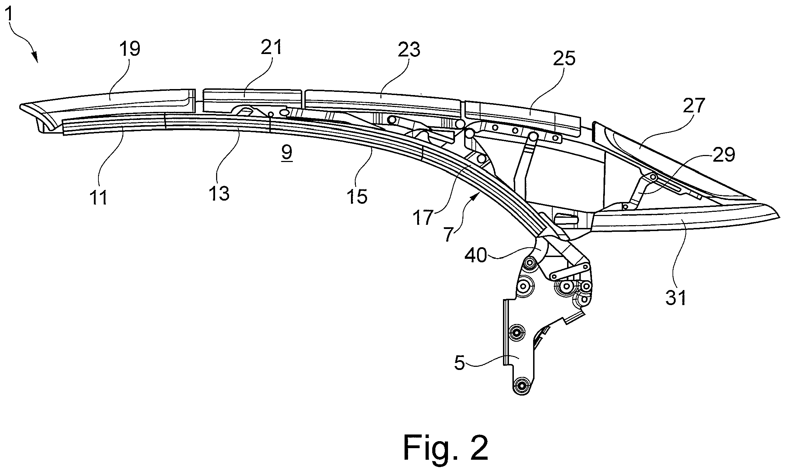

In Fig. 1 ist ein Verdeck 1 eines Cabriolet-Fahrzeugs gezeigt, welches hier als Soft-Top ausgebildet ist. Das Soft-Top-Verdeck 1 ist in der Fig. 1 in einer geschlossenen Stellung gezeigt, wobei ein Verdeckbezug 3 des Verdecks in der Fig. 1 transparent dargestellt ist und in Fig. 2 der besseren Übersichtlichkeit halber nicht gezeigt ist.

Zur Festlegung des Verdecks 1 an einer Karosserie des Cabriolet-Fahrzeugs ist in Seitenbereichen des Verdecks 1 jeweils ein Hauptlager 5 vorgesehen, wobei im Folgenden das der linken Verdeckseite zugeordnete Hauptlager 5 stellvertretend für das der rechten Verdeckseite zugeordnete Hauptlager näher beschrieben wird. An dem Hauptlager 5 ist ein Verdeckgestänge 7 angelenkt, mittels welchem das Verdeck 1 zwischen der in den Fig. 1 und 2 gezeigten geschlossenen Position, in der das Verdeck 1 einen Fahrgastraum 9 des Cabriolet-Fahrzeugs überspannt, und einer den Fahrgastraum 9 zumindest teilweise freigebenden offenen Stellung verlagerbar ist.

Das Verdeck 1 weist vorliegend auf jeder Verdeckseite vier in geschlossener Stellung des Verdecks 1 im Wesentlichen in Verdecklängsrichtung aneinander grenzende seitliche Dachrahmen 11, 13, 15, 17 und vier eine Verdeckbreite wenigstens annähernd überspannende Querspriegel 19, 21, 23 und 25 auf. Die Querspriegel 19, 21, 23 und 25 sind hier als sogenannte Flächenspriegel ausgebildet, d. h. sie weisen eine relativ große Erstreckung in Verdecklängsrichtung auf, so dass der Verdeckbezug 3 in geschlossener Verdeckstellung großflächig an den Querspriegeln 19, 21, 23 und 25 anliegt. In geschlossener Verdeckstellung grenzen die Querspriegel 19, 21, 23 und 25 in Verdecklängsrichtung annähernd aneinander. Der vorderste Querspriegel 19 stellt eine an einem Windschutzscheibenrahmen festlegbare Dachspitze dar, welche vorliegend integral mit den vordersten Dachrahmen 11 ausgebildet ist.

Bei einer Überführung des Verdecks 1 zwischen der geschlossenen und der offenen Stellung wird das Verdeck 1 vorliegend in einer z-förmigen Bewegung abgelegt, wobei der in Verdecklängsrichtung zweite Querspriegel 21 von vorne in gleicher Orientierung unter die Dachspitze 19 verlagert wird. Grundsätzlich sind allerdings auch andere Verdeckbewegungen und Verdeckaufbauten möglich.

Verdeckheckseitig grenzt in geschlossener Verdeckstellung an den Querspriegel 25 eine Heckscheibe 27, welche über ein Gestänge 29 an das Verdeckgestänge 7 angebunden ist. Weiterhin ist ein als Stoffhaltebügel 31 ausgebildetes hinteres Dachelement vorgesehen, welches in der geschlossenen Verdeckstellung eine im Wesentlichen horizontale geschlossene Position einnimmt und dabei insbesondere dichtend mit einem Verdeckkastendeckel und/oder einem Heckdeckel und/oder einer Karosserie des Cabriolet-Fahrzeugs zusammenwirkt.

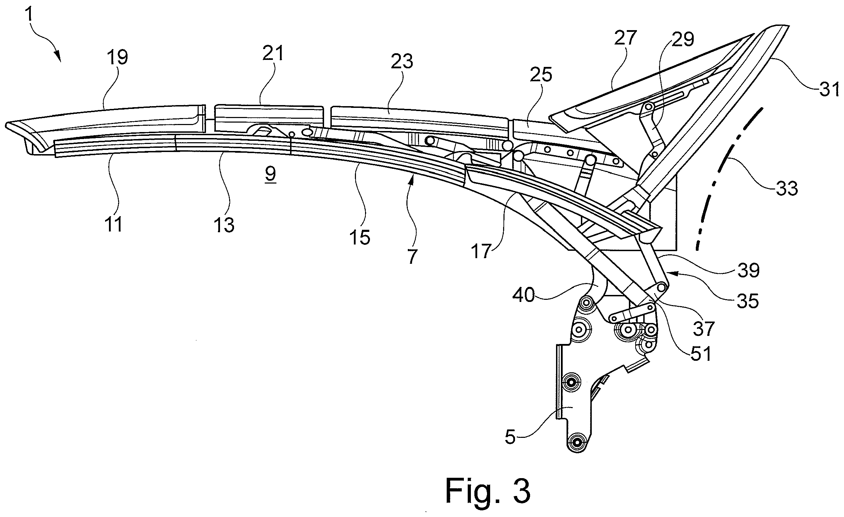

Um das Verdeck 1 von der Schließstellung die offene Stellung überführen zu können, wird zunächst der Stoffhaltebügel 31 um seine verdeckfrontseitige Lagerung an dem Verdeckgestänge 7 - wie in Fig. 3 gezeigt - verschwenkt, so dass der Verdeckkastendeckel einen heckseitigen Verdeckablageraum des Cabriolet-Fahrzeugs freigeben kann. In Fig. 3 ist eine Bewegungsbahn 33 eines verdeckfrontseitigen Endes des Verdeckkastendeckels strichliert gezeigt.

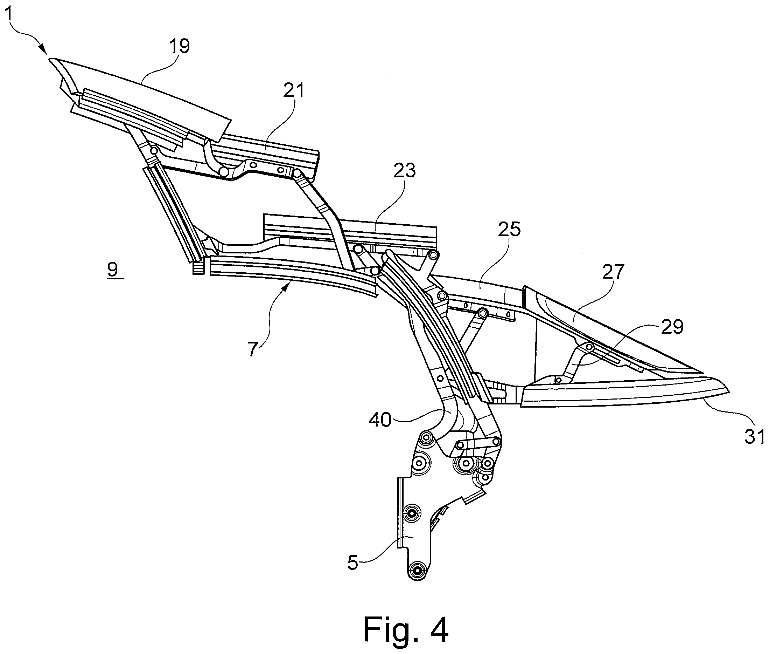

Nachdem der Verdeckkastendeckel geöffnet wurde, wird der Stoffhaltebügel 31 zurück in seine geschlossene Ausgangsposition verlagert und anschließend gemeinsam mit dem restlichen Verdeck 1 in den heckseitigen Verdeckablageraum verlagert. Fig. 4 zeigt hierbei eine Zwischenposition des Verdecks 1 zwischen der vollständig geschlossenen Stellung und der vollständig offenen Stellung.

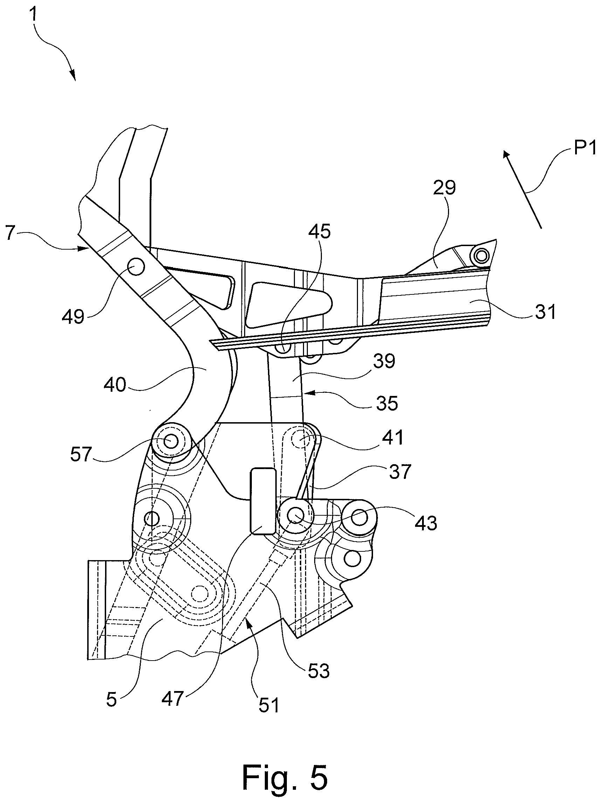

In den Fig. 5 bis Fig. 9 ist jeweils ein Hebelmechanismus 35 ersichtlich, welcher vorliegend als Kniehebelmechanismus mit zwei Hebeln 37 und 39 ausgebildet ist, und welcher den Stoffhaltebügel 31 direkt, d. h. ohne weitere Anbindungsstellen, beispielsweise an das Verdeckgestänge 7 am Hauptlager 5 anbindet. Ein erster Hebel 37 des Hebelmechanismus 35 ist vorliegend verdeckheckseitig eines Hauptlenkers 40 des Verdeckgestänges 7 gelenkig mit dem Hauptlager 5 verbunden und somit karosseriefest festgelegt. An seinem dem Gelenkpunkt 41 mit dem Hauptlager 5 abgewandten Ende ist der erste Hebel 37 gelenkig über einen weiteren Gelenkpunkt 43 mit einem zweiten Hebel 39 des Hebelmechanismus 35 verbunden, welcher wiederum an seinem dem weiteren Gelenkpunkt 43 abgewandten Ende über einen Gelenkpunkt 45 gelenkig mit dem Stoffhaltebügel 31 verbunden ist. Der erste Hebel 37 ist vorliegend kürzer und etwa halb so lang wie der zweite Hebel 39 ausgebildet, wobei das Längenverhältnis der Hebel 37, 39 je nach Anwendungsfall variiert sein kann.

In Fig. 5 ist der Hebelmechanismus 35 in einer Position bei geschlossenem Verdeck 1 ersichtlich. Der Hebelmechanismus 35 nimmt dabei eine Übertotpunktstellung ein, wobei durch einen hier verdeckfrontseitig des weiteren Gelenkpunkts 43 fest mit dem Hauptlager 5 verbundenen Anschlag 47 sichergestellt ist, dass der Stoffhaltebügel 31 bei einem beispielsweise in Richtung des Pfeils P1 nach oben wirkenden Kraftangriff, beispielsweise durch Stoff-, Dichtungs- oder Aerodynamikkräfte, sicher in seiner Schließposition gehalten ist. Dies wird dadurch erreicht, dass der Gelenkpunkt 41 in geschlossener Verdeckposition bezüglich einer Verbindungslinie des Gelenkpunkts 45 und des weiteren Gelenkpunkts 43 auf einer dem nur schematisch gezeigten Anschlag 47 abgewandten Seite angeordnet ist. Hierdurch führt ein oben beschriebener Kraftangriff an dem Stoffhaltebügel 31 dazu, dass der weitere Gelenkpunkt 43 gegen den Anschlag 47 gedrückt wird und dieser eine Bewegung der Hebel 37, 39 des Hebelmechanismus 35 verhindert.

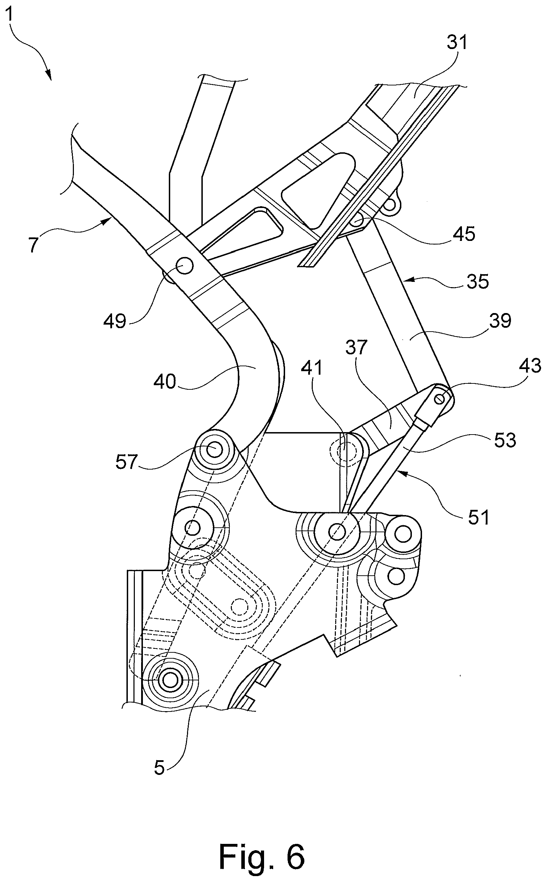

Um den Stoffhaltebügel 31 aus seiner Schließposition in seine in den Fig. 3 und 6 dargestellte, um einen Gelenkpunkt 49 mit dem Hauptlenker 40 verschwenkte Position zu verlagern, ist eine Antriebseinrichtung 51 vorgesehen, welche vorliegend als Zylinder-Kolben-Antrieb ausgebildet ist und am Hauptlager 5 gelagert ist. Ein Kolben 53 der Antriebseinrichtung 51 greift vorliegend in dem weiteren Gelenkpunkt 43 an dem Hebelmechanismus 35 an. Alternativ hierzu kann die Antriebseinrichtung auch mit dem ersten Hebel 37 oder dem zweiten Hebel 39 des Hebelmechanismus 35 verbunden sein.

Durch eine Ausfahrbewegung des Kolbens 53 wird der Kniehebelmechanismus 35 aus seiner Übertotpunktstellung bewegt, wobei der weitere Gelenkpunkt 43 hierbei von dem Anschlag 47 aus zunächst im Wesentlichen in Verdeckheckrichtung wegbewegt und in der in der Fig. 6 ersichtlichen Darstellung entgegen dem Uhrzeigersinn um den karosseriefesten Gelenkpunkt 41 verschwenkt wird. Hierdurch wird eine Verschwenkung des Stoffhaltebügels 31 um den Gelenkpunkt 49 ausgelöst, wobei der Stoffhaltebügel 31 bis in seine in der Fig. 3 näher ersichtliche offene Position aufgeschwenkt wird.

Ausgehend von seiner offenen Position wird der Stoffhaltebügel 31 nach einem Öffnen des Verdeckkastendeckels von der Antriebseinrichtung 51 zurück in seine Position gemäß Fig. 5 verschwenkt, in der der weitere Gelenkpunkt 43 wiederum an dem Anschlag 47 anliegt.

Ausgehend von dieser Position wird der Stoffhaltebügel 31 zusammen mit dem restlichen Verdeck 1 in dem Verdeckablageraum abgelegt. Diese Ablagebewegung wird hier mittels eines als Viergelenk 55 ausgebildeten Ablagemechanismus durchgeführt, wobei der zweite Hebel 39 des Hebelmechanismus 35 einen Teil des Viergelenks 55 bildet. Karosseriefeste Drehpunkte des Viergelenks 55 werden dabei von der Anlenkung 57 des Hauptlenkers 40 an dem Hauptlager 5 und dem weiteren Gelenkpunkt 43 des Hebelmechanismus 35, welcher hierbei wiederum an dem Anschlag 47 anliegt und durch die bei der Absenkung wirkenden Kräfte gegen den Anschlag 47 gedrückt wird, gebildet.

Zusätzlich kann der weitere Gelenkpunkt 43 durch eine entsprechende Ansteuerung der Antriebseinrichtung 51 in seiner an dem Anschlag 47 anliegenden Position gehalten werden.

Neben dem zweiten Hebel 39 des Hebelmechanismus 35 bilden der Hauptlenker 40 und der Stoffhaltebügel 31 die weiteren Lenker des Viergelenks 55, welches somit die Anlenkung 57, den verhältnismäßig weit in Verdeckfrontrichtung angeordneten Gelenkpunkt 49, den Gelenkpunkt 45 und den weiteren Gelenkpunkt 43 als Drehpunkte aufweist.

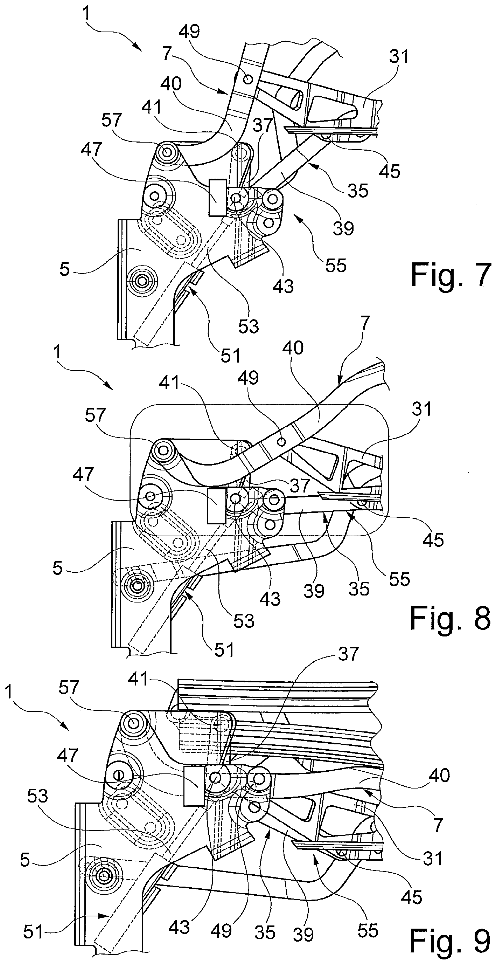

Bei einer durch einen nicht näher ersichtlichen Antrieb ausgelösten Bewegung des Hauptlenkers 40 zur Öffnung des Verdecks 1 wird der Hauptlenker 40 um seine Anlenkung 57 an dem Hauptlager 5 in der Ansicht gemäß der Fig. 5 bis 9 im Uhrzeigersinn verschwenkt. Dabei werden die Lenker 40, 31 und 39 gemäß den Fig. 7 bis 9 verschwenkt, bis das Verdeck 1 in dem Verdeckablageraum angeordnet ist.

Durch die beschriebene Ausführung des Ablagemechanismus kann gegenüber bekannten Ausführungen vorteilhafterweise auf separat vorzusehende Hebel zur Durchführung dieser Bewegung verzichtet werden, so dass durch die Funktionsintegration des Hebels 39 des Hebelmechanismus 35 für die Absenkbewegung des Verdecks 1 eine nötige Anzahl von Bauteilen, ein benötigter Bauraum, ein benötigtes Gewicht und die entsprechend benötigten Kosten für den Ablagemechanismus gegenüber bekannten Ausführungen reduziert sind.

Eine Verdeckschließbewegung läuft in umgekehrter Reihenfolge zu den oben beschriebenen Abläufen bei einer Verdecköffnung ab.

Neben der gezeigten Ausführung des Verdecks 1 als Soft-Top kann das Verdeck alternativ hierzu auch als Hard-Top ausgebildet sein. Das hintere Dachelement ist dann als formstabiles hinteres Dachteil ausgeführt und kann in der oben beschriebenen Weise über einen Hebelmechanismus karosseriefest gelagert werden, wobei über den Hebelmechanismus in analoger Weise das hintere Dachteil bei geschlossenem Verdeck sicher gehalten, das hintere Dachteil zur Ermöglichung einer Aufschwenkbewegung eines Verdeckkastendeckels separat, d. h. unabhängig von einer Bewegung des gesamten Verdecks, aufgeschwenkt werden kann und das hintere Dachteil gemeinsam mit dem restlichen Verdeck in einen Verdeckablageraum abgesenkt werden kann.

## Patentansprüche

1. Verdeck (1) für ein Cabriolet-Fahrzeug, welches zwischen einer einen Fahrgastraum (9) zumindest bereichsweise abdeckenden und einer den Fahrgastraum (9) zumindest teilweise freigebenden Stellung verlagerbar ist, und welches ein zumindest teilweise unabhängig von anderen Dachelementen (11 bis 25) bewegbares hinteres Dachelement (31) aufweist, das zwischen einer Schließposition bei geschlossener Stellung des Verdecks und einer gegenüber der Schließposition zumindest teilweise nach oben aufbewegten Position verlagerbar ist, wobei das hintere Dachelement (31) verdeckfrontseitig an einem Verdeckgestänge (7) gelagert ist, und wobei ein separater Hebelmechanismus (35) zur Verlagerung des hinteren Dachelements (31) zwischen seiner Schließposition und seiner nach oben bewegten Position vorgesehen ist, mittels welchem das hintere Dachelement (31) direkt karosseriefest anbindbar ist,
**dadurch gekennzeichnet,**
**dass** der Hebelmechanismus (35) als Kniehebelmechanismus mit zwei Hebeln (37, 39) ausgebildet ist und dazu ausgebildet ist, das hintere Dachelement (31) in seiner Schließposition zu halten, wobei der Hebelmechanismus (35) keine direkte Anbindung an das zur Bewegung der den Fahrgastraum (9) abdeckenden Dachteile zwischen deren geschlossener und offener Position vorgesehene Verdeckgestänge (7) aufweist und lediglich mit dem hinteren Dachelement (31) verbunden und karosseriefest anbindbar ist.

2. Verdeck nach Anspruch 1,
**dadurch gekennzeichnet,**
**dass** der Hebelmechanismus (35) dazu ausgebildet ist, das hintere Dachelement (31) in eine Ablageposition bei vollständig geöffneter Stellung des Verdecks (1) zu verlagern.

3. Verdeck nach einem der Ansprüche 1 oder 2,
**dadurch gekennzeichnet,**
**dass** ein erster Hebel (37) des Hebelmechanismus (35) karosseriefest insbesondere an einem Hauptlager (5) und ein zweiter Lenker (39) des Hebelmechanismus (35) an dem hinteren Dachelement (31) angelenkt ist, wobei die beiden Hebel (37, 39) wiederum über einen Gelenkpunkt (43) gelenkig miteinander verbunden sind.

4. Verdeck nach einem der Ansprüche 1 bis 3,
**dadurch gekennzeichnet,**
**dass** der Hebelmechanismus (35) in geschlossener Verdeckposition eine Übertotpunktstellung einnimmt.

5. Verdeck nach Anspruch 4,
**dadurch gekennzeichnet,**
**dass** ein Anschlag (47) vorgesehen ist, welcher derart angeordnet ist, dass der sich in Übertotpunktstellung befindende Hebelmechanismus (35) durch eine äußere Krafteinwirkung nicht aus der Übertotpunktstellung bewegbar ist.

6. Verdeck nach einem der Ansprüche 1 bis 5,
**dadurch gekennzeichnet,**
**dass** eine Antriebseinrichtung (51) vorgesehen ist, mittels welcher der Hebelmechanismus (35) antreibbar und das hintere Dachelement (31) zwischen seiner Schließposition und seiner aufbewegten Position verlagerbar ist.

7. Verdeck nach Anspruch 6,
**dadurch gekennzeichnet,**
**dass** die Antriebseinrichtung (51) zur Bewegung des hinteren Dachelements (31) an einem Hebel (37, 39) des Hebelmechanismus (35) oder an einem die Hebel (37, 39) des Hebelmechanismus (35) verbindenden Gelenkpunkt (43) angelenkt ist.

8. Verdeck nach einem der Ansprüche 1 bis 7,
**dadurch gekennzeichnet,**
**dass** ein Hebel (37, 39) des Hebelmechanismus (35) Bestandteil eines Ablagemechanismus (55) ist, mittels welchem das hintere Dachelement (31) bei einer Verdecköffnungsbewegung in die Ablageposition in einem heckseitigen Ablageraum absenkbar ist.

9. Verdeck nach Anspruch 8,
**dadurch gekennzeichnet,**
**dass** der Ablagemechanismus (55) als ein karosseriefest angelenkter Viergelenkmechanismus ausgebildet ist, welcher einen Hebel (37, 39) des Hebelmechanismus (35), einen Hauptlenker (40) des Verdeckgestänges (7) und das hintere Dachelement (31) umfasst.

10. Verdeck nach einem der Ansprüche 8 oder 9,
**dadurch gekennzeichnet,**
**dass** ein Anschlag (47) vorgesehen ist, welcher sicherstellt, dass ein Gelenkpunkt (43) der Hebel (37, 39) des Hebelmechanismus (35) während der Ablagebewegung des hinteren Dachelements (31) karosseriefest ist.

11. Verdeck nach einem der Ansprüche 1 bis 10,
**dadurch gekennzeichnet,**
**dass** das Verdeck (1) als Soft-Top ausgebildet ist und das hintere Dachelement (31) ein Stoffhaltebügel ist.

12. Verdeck nach einem der Ansprüche 1 bis 10,
**dadurch gekennzeichnet,**
**dass** das Verdeck als Hard-Top ausgebildet ist und das hintere Dachelement ein hinteres Dachteil ist.

13. Verdeck nach einem der Ansprüche 1 bis 12,
**dadurch gekennzeichnet,**
**dass** das hintere Dachelement (31) schwenkbar an einem Hauptlenker (40) des Verdeckgestänges (7) angelenkt ist.

## Claims

1. A hood (1) for a convertible vehicle, which can be displaced between a position at least partly covering a passenger compartment (9) and a position at least partly exposing the passenger compartment (9), and which has a rear roof element (31) which can be moved at least partly independently of other roof elements (11 to 25) and which can be displaced between a closed position when the hood is in the closed position and a position moved at least partly upwards with respect to the closed position, wherein the rear roof element (31) is mounted on its side towards the hood front on a hood linkage (7), and wherein a separate lever mechanism (35) is provided for displacing the rear roof element (31) between its closed position and its upwardly moved position, by means of which lever mechanism (35) the rear roof element (31) can be fixed directly to the vehicle body,
**characterised in that**
the lever mechanism (35) is designed as a toggle lever mechanism with two levers (37, 39) and is designed to hold the rear roof element (31) in its closed position, the lever mechanism (35) having no direct connection to the hood linkage (7) provided for moving the roof parts covering the passenger compartment (9) between their closed and open positions, and the lever mechanism (35) being connected only to the rear roof element (31) and being able to be fixed to the vehicle body.

2. The hood according to claim 1,
**characterised in that**
the lever mechanism (35) is designed to displace the rear roof element (31) into a storage position when the hood (1) is fully open.

3. The hood according to any one of claims 1 or 2,
**characterised in that**
a first lever (37) of the lever mechanism (35) is hinged in a manner fixed to the body, in particular to a main bearing (5), and a second lever (39) of the lever mechanism (35) is hinged to the rear roof element (31), the two levers (37, 39) in turn being connected to one another in an articulated manner via a point of articulation (43).

4. The hood according to any one of claims 1 to 3,
**characterised in that**
the lever mechanism (35) assumes an over-centre position in the closed hood position.

5. The hood according to claim 4,
**characterised in that**
a stop (47) is provided which is arranged in such a way that the lever mechanism (35) which is in the over-centre position cannot be moved out of the over-centre position by an external application of force.

6. The hood according to any one of claims 1 to 5,
**characterised in that**
a drive means (51) is provided by means of which the lever mechanism (35) can be driven, and the rear roof element (31) can be displaced between its closed position and its moved-up position.

7. The hood according to claim 6,
**characterised in that**
the drive means (51) for moving the rear roof element (31) is hinged to a lever (37, 39) of the lever mechanism (35) or to a point of articulation (43) connecting the levers (37, 39) of the lever mechanism (35).

8. The hood according to any one of claims 1 to 7,
**characterised in that**
a lever (37, 39) of the lever mechanism (35) is a component of a storage mechanism (55) by means of which the rear roof element (31) can be lowered into the storage position in a rear storage space during a hood-opening movement.

9. The hood according to claim 8,
**characterised in that**
the storage mechanism (55) is designed as a four-bar linkage which is articulated to the vehicle body and comprises a lever (37, 39) of the lever mechanism (35), a main link (40) of the hood linkage (7) and the rear roof element (31).

10. The hood according to any one of claims 8 or 9,
**characterised in that**
a stop (47) is provided which ensures that a point of articulation (43) of the levers (37, 39) of the lever mechanism (35) is fixed to the vehicle body during the storage movement of the rear roof element (31).

11. The hood according to any one of claims 1 to 10,
**characterised in that**
the hood (1) is designed as a soft top and the rear roof element (31) is a fabricholding bracket.

12. The hood according to any one of claims 1 to 10,
**characterised in that**
the hood is designed as a hard top and the rear roof element is a rear roof part.

13. The hood according to any one of claims 1 to 12,
**characterised in that**
the rear roof element (31) is pivotably articulated to a main link (40) of the roof linkage (7).

## Revendications

1. Capote (1) pour un véhicule cabriolet, qui peut être déplacée entre une position couvrant au moins partiellement un habitacle (9) et une position découvrant au moins partiellement l'habitacle (9), et qui présente un élément de toit arrière (31) qui peut être déplacé au moins partiellement indépendamment d'autres éléments de toit (11 à 25) et qui peut être déplacé entre une position fermée lorsque la capote est en position fermée et une position ouverte au moins partiellement vers le haut par rapport à la position fermée, l'élément de toit arrière (31) étant monté sur le côté dans la direction d'avant de la capote sur une tringlerie de capote (7), et un mécanisme à levier (35) séparé étant prévu pour déplacer l'élément de toit arrière (31) entre sa position fermée et sa position relevée, au moyen duquel l'élément de toit arrière (31) peut être monté fixe directement sur la carrosserie,
**caractérisée en ce que**
le mécanisme à levier (35) est conçu comme un mécanisme à levier à bascule avec deux leviers (37, 39) et est réalisé de manière à maintenir l'élément de toit arrière (31) dans sa position fermée, le mécanisme à levier (35) n'ayant aucune liaison directe avec la tringlerie de capote (7) prévue pour déplacer les parties de toit couvrant l'habitacle (9) entre leurs positions fermée et ouverte, étant relié uniquement à l'élément de toit arrière (31) et pouvant être monté fixe à la carrosserie.

2. Capote selon la revendication 1,
**caractérisée en ce que**
le mécanisme à levier (35) est adapté pour déplacer l'élément de toit arrière (31) vers une position de rangement lorsque la capote (1) est en position complètement ouverte.

3. Capote selon l'une quelconque des revendications 1 ou 2,
**caractérisée en ce qu'**un premier levier (37) du mécanisme à levier (35) est monté fixe sur la carrosserie en étant articulé, notamment sur un palier principal (5), et un deuxième bras (39) du mécanisme à levier (35) est articulé sur l'élément de toit arrière (31), les deux leviers (37, 39) étant articulés l'un sur l'autre par un point d'articulation (43).

4. Capote selon l'une quelconque des revendications 1 à 3,
**caractérisée en ce que**
le mécanisme à levier (35) prend une position au-delà du point mort dans la position fermée de la capote.

5. Capote selon la revendication 4,
**caractérisée en ce que**
l'on prévoit une butée (47), qui est disposée de sorte que le mécanisme à levier (35) qui se trouve dans ladite position de passage du point mort ne puisse pas être déplacé hors de la position de passage du point mort par une force extérieure.

6. Capote selon l'une quelconque des revendications 1 à 5,
**caractérisée en ce que**
l'on prévoit un moyen d'entraînement (51) par lequel le mécanisme à levier (35) peut être entraîné et l'élément de toit arrière (31) peut être déplacé entre sa position fermée et sa position ouverte.

7. Capote selon la revendication 6,
**caractérisée en ce que**
le moyen d'entraînement (51) pour déplacer l'élément de toit arrière (31) est articulé sur un levier (37, 39) du mécanisme à levier (35) ou à un point d'articulation (43) reliant les leviers (37, 39) du mécanisme à levier (35).

8. Capote selon l'une quelconque des revendications 1 à 7,
**caractérisée en ce qu'**un levier (37, 39) du mécanisme à levier (35) est un composant d'un mécanisme de rangement (55) au moyen duquel l'élément de toit arrière (31) peut être abaissé dans la position de rangement dans un espace de rangement arrière lors d'un mouvement d'ouverture de capote.

9. Capote selon la revendication 8,
**caractérisée en ce que**
le mécanisme de rangement (55) est réalisé sous forme d'un mécanisme à quatre articulations monté fixe à la carrosserie et comprenant un levier (37, 39) du mécanisme à levier (35), un bras principal (40) de la tringlerie de capote (7) et l'élément de toit arrière (31).

10. Capote selon l'une quelconque des revendications 8 ou 9,
**caractérisée en ce que**
l'on prévoit une butée (47) qui assure qu'un point d'articulation (43) des leviers (37, 39) du mécanisme à levier (35) est monté fixe à la carrosserie pendant le mouvement de rangement de l'élément de toit arrière (31).

11. Capote selon l'une quelconque des revendications 1 à 10,
**caractérisée en ce que**
le toit (1) est réalisé sous forme d'une capote souple et l'élément de toit arrière (31) est un étrier de retenue.

12. Capote selon l'une quelconque des revendications 1 à 10,
**caractérisée en ce que**
la capote est réalisée sous forme d'un toit rigide et l'élément de toit arrière est une partie de toit arrière.

13. Capote selon l'une quelconque des revendications 1 à 12,
**caractérisée en ce que**
l'élément de toit arrière (31) est articulé sur un bras principal (40) de la tringlerie de capote (7).
